# EUROPÄISCHE PATENTANMELDUNG

(11) **EP 4 501 099 A1**
(43) Veröffentlichungstag der Anmeldung: **05.02.2025**
(21) Anmeldenummer: 24176990.0
(22) Anmeldetag: 21.05.2024
(51) Int. Cl.: A01D 41/127, A01D 75/18

(54) **ERNTEMASCHINE**

(30) Priorität: 31.07.2023 DE 102023120264
(71) Anmelder: CLAAS Selbstfahrende Erntemaschinen GmbH, 33428 Harsewinkel (DE)
(72) Erfinder: Bönig, Ingo, 33330 Gütersloh (DE); Thiesmann, Waldemar, 49080 Osnabrück (DE); Bussmann, Christoph, 33428 Harsewinkel (DE); Cord-Kruse, Christian, 48231 Warendorf (DE); Füchtling, Christian, 48317 Drenstein Rinkerode (DE); Grove, Carsten, 48361 Beelen (DE); Neitemeier, Dennis, 59510 Lippetal (DE); Bormann, Bastian, 33334 Gütersloh (DE); Wilken, Andreas, 49143 Bissendorf (DE); Spiekermann, Sebastian, 48346 Ostbevern (DE); Irmer, Daniel, 33442 Herzebock-Clarholz (DE)
(74) Vertreter: CLAAS 365FarmNet GmbH

(57) **Zusammenfassung**

Die vorliegende Anmeldung betrifft eine Erntemaschine (1), umfassend einen Fahrantrieb (2) zur Bewegung der Erntemaschine (1) mit einer Fahrgeschwindigkeit über ein Feld (3), ein Schneidwerk (4) zum Abschneiden von auf dem Feld befindlichen Erntegut (5), eine Sensoreinrichtung (6) zur Erfassung von Informationen betreffend einen aktuell von der Erntemaschine (1) verarbeiteten Erntegutdurchsatz, eine Steuerung (7), die dazu vorgesehen und eingerichtet ist, den Fahrantrieb (2) der Erntemaschine (1) abhängig von den erfassten Informationen zur Einstellung der Fahrgeschwindigkeit auf einen gewünschten Soll-Wert anzusteuern.

Um eine Erntemaschine bereitzustellen, die gegenüber dem Stand der Technik eine höhere Betriebssicherheit aufweist, wird erfindungsgemäß vorgeschlagen, dass die Steuerung (7) dazu vorgesehen und eingerichtet ist, zusätzlich Informationen zu einer erwarteten Schneidwerksbelegung im Vorfeld (8) der Erntemaschine (1) zu erhalten und den Fahrantrieb (2) abhängig von der erwarteten Schneidwerksbelegung zur Anpassung der Fahrgeschwindigkeit anzusteuern.

## Beschreibung

Die vorliegende Anmeldung betrifft eine Erntemaschine gemäß dem Oberbegriff von Anspruch 1.

Die Erntemaschine, die insbesondere von einem Mähdrescher oder einem Feldhäcksler gebildet sein kann, umfasst einen Fahrantrieb zur Bewegung der Erntemaschine mit einer Fahrgeschwindigkeit über ein Feld. Der Fahrantrieb kann beispielsweise eine Verbrennungskraftmaschine sowie ein Fahrgetriebe umfassen. Der Fahrantrieb dient in aller Regel zum Antrieb von Rundreifen und/oder Raupenlaufwerken, mittels derer die Erntemaschine auf einem Untergrund bewegt wird.

Die Erntemaschine umfasst ferner ein Schneidwerk zum Abschneiden von auf dem Feld befindlichen Erntegut. Das Schneidwerk kann insbesondere einen Mähbalken umfassen, der bei bestimmungsgemäßem Betrieb der Erntemaschine in geringem Abstand über dem Boden geführt wird und die das Erntegut bildenden Pflanzen knapp oberhalb des Bodens abschneidet. Das abgeschnittene Erntegut wird sodann typischerweise in Richtung einer mittigen Übergabeöffnung des Schneidwerks bewegt und dort an einen nachgeschalteten Einzugskanal übergeben. Mittels des Einzugskanals wird das Erntegut an nachgeschaltete Arbeitsorgane der Erntemaschine übergeben. Beim Mähdrescher kann dies insbesondere eine Drescheinrichtung, beim Feldhäcksler insbesondere eine Häckseleinrichtung sein.

Die Erntemaschine umfasst ferner eine Sensoreinrichtung, die zur Erfassung von Informationen betreffend einen aktuell von der Erntemaschine verarbeiteten Erntegutdurchsatz vorgesehen und eingerichtet ist. Insbesondere kann die Sensoreinrichtung in oder an einem Einzugskanal der Erntemaschine wirken, um dort einen gesamten von dem Schneidwerk an nachgeschaltete Arbeitsorgane geförderten Erntegutstrom messtechnisch zu erfassen. Die Sensoreinrichtung kann beispielsweise von einem Schichthöhensensor gebildet sein, mittels dessen eine Schichthöhe einer Erntegutschicht eines durch den Einzugskanal geförderten Erntegutstroms erfassbar ist.

Schließlich umfasst die Erntemaschine des Weiteren eine Steuerung, die dazu vorgesehen und eingerichtet ist, den Fahrantrieb der Erntemaschine in Abhängigkeit von den von der Sensoreinrichtung erfassten Informationen anzusteuern. Diese Ansteuerung erfolgt bestimmungsgemäß derart, dass mittels der Steuerung die Fahrgeschwindigkeit der Erntemaschine auf einen gewünschten Soll-Wert eingestellt wird. Dem folgt die Überlegung, dass der aktuelle Erntegutdurchsatz, der mittels der Sensoreinrichtung erfasst wird, mit der Belastung der nachfolgenden Arbeitsorgane der Erntemaschine korreliert. Um eine Überlastung der Arbeitsorgane zu vermeiden, wählt die Steuerung bei einem hohen Erntegutdurchsatz demzufolge eine niedrige Fahrgeschwindigkeit der Erntemaschine, um den Erntegutdurchsatz zu reduzieren. Umgekehrt kann die Steuerung bei einem geringen aktuellen Erntegutdurchsatz die Fahrgeschwindigkeit erhöhen, um die Arbeitsorgane der Erntemaschine nah an ihrem optimalen Betriebspunkt zu betreiben und auf diese Weise die Effizienz des Erntevorgangs zu erhöhen.

Erntemaschinen der vorstehend beschriebenen Art sind im Stand der Technik bereits bekannt. Hierzu wird beispielhaft auf die deutsche Offenlegungsschrift DE 10 2013 209 197 A1 hingewiesen. Dort wird eine automatische Regelung der Fahrgeschwindigkeit eines Mähdreschers offenbart, für die ein aktueller Erntegutdurchsatz in dem Mähdrescher sowie ein zu erwarteter Erntegutdurchsatz berücksichtigt werden, wobei letzterer mittels einer berührungslosen Erfassung im Vorfeld des Mähdreschers ermittelt wird. Die berührungslose Erfassung erfolgt mittels einer Kamera, einem Radarsensor oder einem Lasersensor. Mittels der vorausschauenden Ermittlung des zu erwartenden Erntegutdurchsatzes kann die Fahrgeschwindigkeit prädiktiv geändert werden, und zwar auch dann, wenn allein anhand des aktuell in dem Mähdrescher erfassten Erntegutdurchsatzes eine Veränderung der Fahrgeschwindigkeit (noch) nicht angezeigt gewesen wäre.

Der somit bekannte Gedanke, die Fahrgeschwindigkeit der Erntemaschine an einen demnächst erwarteten Erntegutdurchsatz anzupassen, bietet den Vorteil, dass ein Zeitversatz zwischen einer Veränderung der Fahrgeschwindigkeit und dem von der Erntemaschine aktuell zu bearbeitenden Erntegutdurchsatz vermieden wird. Bei einer reinen Messung des aktuellen Erntegutdurchsatzes kann die Fahrgeschwindigkeit hingegen erst geändert werden, wenn eine Veränderung des Erntegutdurchsatzes gemessen wurde und somit bereits Realität ist.

Das bekannte Verfahren hat gleichwohl den Nachteil, dass unregelmäßige Geometrien des auf dem jeweiligen Feld vorhandenen Erntegutbestands nicht hinreichend berücksichtigt werden können. Somit kommt es in der Praxis immer wieder zu Überlastungen der Arbeitsorgane der jeweiligen Erntemaschine, wenn sich das von dem Feld aufgenommen Erntegut mengenmäßig derart schnell verändert, dass die mit den bekannten Mitteln vorgenommene Veränderung der Fahrgeschwindigkeit der Erntemaschine nicht ausreicht, um die Überlastung der Arbeitsorgane zu verhindern.

Der vorliegenden Anmeldung liegt mithin die Aufgabe zugrunde, eine Erntemaschine bereitzustellen, die gegenüber dem Stand der Technik eine höhere Betriebssicherheit aufweist.

Die zugrunde liegende Aufgabe wird erfindungsgemäß mittels einer Erntemaschine mit den Merkmalen des Anspruchs 1 gelöst. Vorteilhafte Ausgestaltungen ergeben sich aus den Unteransprüchen.

Die erfindungsgemäße Erntemaschine ist dadurch gekennzeichnet, dass die Steuerung dazu vorgesehen und eingerichtet ist, zusätzlich zu den von der Sensoreinrichtung erfassten Informationen betreffend den aktuell von der Erntemaschine verarbeiteten Erntegutdurchsatz weitere Informationen zu erhalten, die eine zu erwartende Schneidwerksbelegung im Vorfeld der Erntemaschine betreffen. Die Steuerung ist ferner dazu vorgesehen und eingerichtet, den Fahrantrieb in Abhängigkeit von der erwarteten Schneidwerksbelegung anzusteuern und hierdurch die Fahrgeschwindigkeit der Erntemaschine anzupassen. Die Steuerung verarbeitet mithin Informationen von mindestens zwei verschiedenen Arten, nämlich zum einen Informationen betreffend den aktuellen Erntegutdurchsatz der Erntemaschine und zum anderen Informationen betreffend eine erwartete Schneidwerksbelegung, die in naher Zukunft bei einer planmäßigen Weiterfahrt der Erntemaschine auftreten wird.

Der Erfindung liegt mithin der Gedanke zugrunde, dass der Erntegutdurchsatz sich mit einer ändernden Schneidwerksbelegung sehr kurzfristig ändern kann, beispielsweise in Form einer schlagartigen Änderung bei einem Übergang des Schneidwerks von einer Teilbelegung hin zu einer Vollbelegung. Derartige Änderungen treten prinzipbedingt unabhängig von einer Dichte des auf dem jeweiligen Feld befindlichen Ernteguts auf und stellen somit Sondereffekte da, die im Stand der Technik nicht hinreichend berücksichtigt werden. Sofern beispielsweise im Vorfeld der Erntemaschine erkannt wird, dass sich die Schneidwerksbelegung schlagartig erhöht, beispielsweise ausgehend von einer halben Schneidwerksbelegung, bei der sich der Erntegutbestand in Breitenrichtung der Erntemaschine betrachtet lediglich über eine halbe Breite des Schneidwerks der Erntemaschine erstreckt, hin zu einer vollen Schneidwerksbelegung, bei der sich der Erntegutbestand über die gesamte Breite des Schneidwerks erstreckt, kann die Fahrgeschwindigkeit rechtzeitig reduziert werden, um bei Wirksamwerden der schlagartigen Erhöhung der Schneidwerksbelegung der Erntegutdurchsatz in der Erntemaschine nicht zu einer Überlastung führt.

Würde die Schneidwerksbelegung nicht überwacht und die Steuerung nicht mit entsprechenden Informationen versorgt werden, könnte die Fahrgeschwindigkeit der Erntemaschine nur anhand der Informationen der Sensorvorrichtung betreffend den aktuellen Erntegutdurchsatz vorgenommen werden. Bei einer schlagartigen Steigerung des Erntegutdurchsatzes ist es jedoch typischerweise für eine Reduktion der Fahrgeschwindigkeit bereits zu spät, wenn diese Steigerung innerhalb der Erntemaschine mittels der Sensoreinrichtung, beispielsweise in oder an einem Einzugskanal, festgestellt wird. Zu diesem Zeitpunkt lässt sich kaum noch verhindern, dass ein sprunghaft ansteigender Massenstrom des zu verarbeitenden Ernteguts an die nachgeschalteten Arbeitsorgane der Erntemaschine weitergereicht wird und dort zu einer Überlastung führt. Die Folge sind Stillstandzeiten gegebenenfalls verbunden mit Reparaturarbeiten, die die Produktivität des Ernteprozesses deutlich reduzieren.

Ebenso ist ein Szenario von Bedeutung, bei dem die Erntemaschine aus einem Erntegutbestand ausfährt und die Bestandskante schräg verläuft. Der Erntegutdurchsatz nimmt bei der Ausfahrt sukzessive ab, woraufhin die Steuerung die Fahrgeschwindigkeit zur Steigerung des Erntegutdurchsatzes erhöht wird. Die Steuerung erkennt gemäß der Erfindung jedoch, dass die Schneidwerksbelegung bis auf null abnimmt, das heißt die Erntemaschine aus dem Bestand ausfährt. Daraufhin nimmt sie dahingehend Einfluss auf die Steuerung, dass die Fahrgeschwindigkeit nicht über einen voreingestellten Wert hinaus angehoben wird. Mit anderen Worten wird mittels der Steuerung die Fahrgeschwindigkeit der Erntemaschine bei einer Ausfahrt aus einem Erntegutbestand begrenzt. Dies erleichtert ein Wendemanöver im Vorgewende des jeweiligen Feldes und führt dadurch zu einem Komfortgewinn für den Maschinenführer.

In einer vorteilhaften Ausgestaltung umfasst die Erntemaschine mindestens eine Erfassungseinrichtung, die dazu vorgesehen und eingerichtet ist, Informationen betreffend einen im Vorfeld vor der Erntemaschine auf dem Feld vorhandenen Erntegutbestand zu erfassen. Mittels der Erfassungseinrichtung können mittelbar oder unmittelbar die Informationen erfasst werden, die gemäß vorstehender Beschreibung der Steuerung zur Verfügung gestellt werden, um den Fahrantrieb in Abhängigkeit von der erwarteten Schneidwerksbelegung zur Anpassung der Fahrgeschwindigkeit anzusteuern.

In besonders bevorzugter Ausgestaltung kann die Erfassungseinrichtung eine Empfangseinrichtung umfassen, die zur Erfassung von Signalen zu satellitengestützen Standortbestimmung eingerichtet ist. Beispielsweise kann die Empfangseinrichtung dazu eingerichtet sein, Standortsignale des GPS-Systems, des Galileo-Systems und/oder sonstiger Satellitensysteme zur Standortbestimmung zu empfangen. Für die Verarbeitung dieser Informationen kann die Steuerung des Weiteren auf Bestandskarten zugreifen, die das jeweilig zu bearbeitenden Feld abbilden, das heißt insbesondere Aufschluss über die Geometrie einer Bestandskante des Erntegutbestands geben. In Kombination mit den von der Empfangseinrichtung bereitgestellten Informationen, die von Standortinformationen gebildet sind, kann die Steuerung auswerten, wo sich die Erntemaschine relativ zu dem Erntegutbestand befindet und in welcher Form sich der Erntegutbestand im Vorfeld der Erntemaschine bei bestimmungsgemäßer Weiterfahrt der Erntemaschine verhält, insbesondere verändert. Eine etwaige schlagartige Veränderung der Schneidwerksbelegung des Schneidwerks der Erntemaschine kann auf diesem Wege frühzeitig erkannt werden, sodass die Steuerung den Fahrantrieb zur Anpassung der Fahrgeschwindigkeit ansteuern kann. Hierzu ist es ergänzend unbedingt sinnvoll, wenn der Steuerung Daten betreffend eine Breite des Schneidwerks zur Verfügung stehen.

Alternativ oder zusätzlich zu der Empfangseinrichtung kann die Erfassungseinrichtung in einer vorteilhaften Ausgestaltung der Erntemaschine eine Sensoreinheit umfassen, die dazu vorgesehen und eingerichtet ist, Informationen zur voraussichtlichen Schneidwerksbelegung des Schneidwerks zu erfassen, die bei planmäßiger Weiterfahrt der Erntemaschine zu erwarten ist. Eine solche Sensoreinheit kann beispielsweise mindestens ein LIDAR-System umfassen, das zur Erfassung des Vorfelds der Erntemaschine eingerichtet ist. Dieses System kann insbesondere mindestens einen Laser, mindestens einen Scanner sowie mindestens einen Detektor umfassen, wobei in an sich bekannter Weise mittels des Lasers Laserstrahlen erzeugt werden, die mittels des Scanners innerhalb eines Beobachtungsbereichs verteilt werden, wobei die Laserstrahlen von Gegenständen innerhalb des Beobachtungsbereichs reflektiert und diese Reflexionen von dem Detektor registriert werden. Über eine time-of-flight-Messung kann auf diese Weise ein dreidimensionales Bild des Beobachtungsbereichs erstellt werden, der das Vorfeld der Erntemaschine umfasst. Auf diese Weise liegen Informationen vor, anhand derer die Schneidwerksbelegung im Vorfeld der Erntemaschine beurteilt werden kann. Anhand dieser Informationen kann die Steuerung eine erwartete Schneidwerksbelegung ermitteln, die bei planmäßiger Weiterfahrt der Erntemaschine demnächst an dem Schneidwerk anliegen wird. Entsprechend ist es möglich, dass die Steuerung den Fahrantrieb der Erntemaschine zur Anpassung der Fahrgeschwindigkeit an die erwartete Schneidwerksbelegung ansteuert.

Alternativ oder zusätzlich zu einem beschriebenen LIDAR-System kann die Sensoreinheit mindestens eine Kamera umfassen, die zur optischen Erfassung des Vorfelds der Erntemaschine eingerichtet ist. Mittels einer solchen Kamera sind fortwährend Informationen in Form von Bildinformationen erfassbar, die beispielsweise anhand einer Bildanalyse ausgewertet werden können. Beispielsweise ist es denkbar, dass die Informationen der Kamera an die Steuerung geleitet und dort zur weiteren Auswertung verarbeitet werden. Eine durchgeführte Bildanalyse kann Aufschluss darüber geben, dass sich die Schneidwerksbelegung bei planmäßiger Weiterfahrt der Erntemaschine demnächst ändern wird, sodass die Steuerung in beschriebener Weise darauf reagieren und den Fahrantrieb zur Anpassung der Fahrgeschwindigkeit ansteuern kann.

Grundsätzlich kann es vorteilhaft sein, wenn die mittels der Erfassungseinrichtung erfassten Informationen an die Steuerung und/oder eine gesonderte Verarbeitungseinheit leitbar sind, sodass die Informationen mittels der Steuerung bzw. der Verarbeitungseinheit verarbeitbar sind. Auf diese Weise können die erfassten Informationen bei Bedarf in andere Informationen umgewandelt bzw. verarbeitet werden, anhand derer die Steuerung die erwartete Schneidwerksbelegung beurteilen kann. Die Übergabe von Informationen von der Erfassungseinrichtung an die Steuerung kann demzufolge mittelbar oder unmittelbar erfolgen, wobei gegebenenfalls ein Umweg über eine Verarbeitungseinheit vorgesehen ist, um die von der Erfassungseinrichtung erfassten Informationen zunächst in eine Form zu bringen, die von der Steuerung verarbeitet werden kann. Eine solche Verarbeitungseinheit kann beispielsweise extern, das heißt abseits der Erntemaschine selbst, angeordnet sein, wobei eine Übertragung von Informationen von der Erfassungseinrichtung an die Verarbeitungseinheit beispielsweise kabellos über das Mobilfunknetz bzw. das Internet erfolgen kann.

Wie eingangs bereits dargelegt, kann es besonders vorteilhaft sein, wenn die Sensoreinrichtung zur Erfassung von Informationen betreffend den aktuell von der Erntemaschine verarbeiteten Erntegutdurchsatz mit einem Einzugskanal der Erntemaschine zusammenwirkt. Auf diese Weise ist mittels der Sensoreinrichtung der Erntegutdurchsatz in dem Einzugskanal erfassbar. In besonders bevorzugter Weise kann die Sensoreinrichtung mindestens einen Schichthöhensensor umfassen, mittels dessen eine Schichthöhe einer Erntegutschicht des Ernteguts, das durch den Einzugskanal gefördert wird, erfasst werden kann. Aus der Schichthöhe der Erntegutschicht und in Kenntnis einer Breite des Einzugskanals lässt sich infolge einer fortwährenden Beobachtung der Erntegutdurchsatz in Form eines Massenstroms (kg/s) oder eines Volumenstroms (m³/s) ermitteln. Diese Information der Sensoreinrichtung wird sodann in beschriebener Weise von der Steuerung zur Einstellung der Fahrgeschwindigkeit der Erntemaschine verwendet.

Die Erfindung ist nachstehend anhand eines Ausführungsbeispiels, das in den Figuren dargestellt ist, näher erläutert. Es zeigt:
- Fig. 1:: Ein vertikaler Längsschnitt durch eine erfindungsgemäße Erntemaschine,
- Fig. 2:: Eine schematische Darstellung der Erntemaschine gemäß Figur 1 im Einsatz auf einem Feld,
- Fig. 3:: Eine Seitenansicht der Erntemaschine gemäß Figur 2,
- Fig. 4:: Eine Veranschaulichung eines Erntegutdurchsatzes und einer Fahrgeschwindigkeit jeweils über die Zeit bei einer sich ändernden Schneidwerksbelegung eines Schneidwerks der Erntemaschine 1,
- Fig. 5:: Eine weitere Veranschaulichung eines Erntegutdurchsatzes und einer Fahrgeschwindigkeit jeweils über die Zeit bei einer sich ändernden Schneidwerksbelegung eines Schneidwerks der Erntemaschine 1.

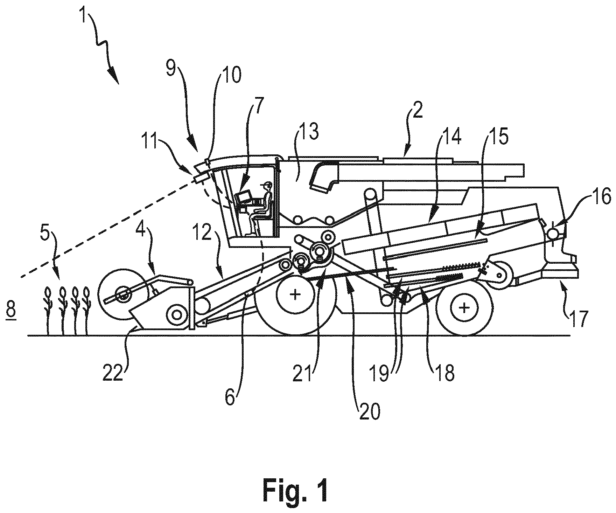

Ein Ausführungsbeispiel, das in den **Figuren 1 bis 5** dargestellt ist, umfasst eine erfindungsgemäße Erntemaschine **1,** die in dem gezeigten Beispiel von einem selbstfahrenden Mähdrescher gebildet ist. Dieser umfasst einen Fahrantrieb **2,** der in dem gezeigten Beispiel eine Verbrennungskraftmaschine sowie eine damit wirkverbundene Getriebeeinrichtung umfasst. An einem in Fahrtrichtung vorderen Ende der Erntemaschine **1** umfasst diese ein Schneidwerk **4,** das einen Mähbalken **22** zum Abschneiden von auf einem Feld **3** aufstehendem Erntegut **5** eingerichtet ist. Ausgehend von dem Schneidwerk **4** wird abgeschnittenes Erntegut **5** in einen Einzugskanal **12** geleitet, der mitunter auch als Schrägförderer bezeichnet wird. Mittels des Einzugskanals **12** wird das Erntegut **5** bzw. der daraus gebildete Erntegutstrom nachgeschalteten Arbeitsorganen zugeleitet.

Zunächst gelang der Erntegutstrom in dem gezeigten Beispiel zu einer Drescheinrichtung **21,** mittels der Früchte des Ernteguts **5** von Pflanzenresten getrennt werden. Ein Großteil der abgetrennten Früchte wird durch einen Dreschkorb der Drescheinrichtung **21** auf einen Vorbereitungsboden **20** abgeschieden, von dem ausgehend die Früchte einer Siebeinrichtung **18** zugeleitet werden. Dieses umfasst zwei Siebe **19,** nämlich ein Obersieb und ein Untersieb. Ein verbleibender Teil der in der Drescheinrichtung **21** abgetrennten Früchte wird gemeinsam mit den Pflanzenresten an eine Trenneinrichtung übergeben wird, die in dem gezeigten Beispiel von einem Trennrotor **14** gebildet ist. Mittels des Trennrotors **14** werden die verbleibenden Früchte von den Pflanzenresten getrennt. Die Pflanzenreste werden schließlich einem heckseitigen Häckslers **16** der Erntemaschine **1** zugeführt, mittels dessen sie gehäckselt und schließlich über ein Radialgebläse **17** heckseitig ausgeworfen werden. Die mittels des Trennrotors **14** abgeschiedenen Früchte werden nach unten auf einen Rücklaufboden **15** geführt, von dem ausgehend sie auf den Vorbereitungsboden **20** und schließlich ebenfalls der Siebeinrichtung **18** zugeführt werden. Die abgesiebten Früchte werden schließlich in einen Korntank **13** gefördert und dort gelagert.

Der Mähdrescher **1** umfasst des Weiteren eine Steuerung **7,** die dazu vorgesehen und eingerichtet ist, den Fahrantrieb **2** anzusteuern. Dies erfolgt in solcher Weise, dass die Fahrgeschwindigkeit der Erntemaschine **1** automatisch eingestellt wird und einen ermittelten Soll-Wert einnehmen soll. Dieser Soll-Wert wird zunächst anhand des Erntegutdurchsatzes ermittelt, der aktuell in der Erntemaschine **1** verarbeitet wird. Um Informationen betreffend diesen aktuellen Erntegutdurchsatz zu erfassen, verfügt die Erntemaschine **1** über eine Sensoreinrichtung **6.** Diese ist in dem gezeigten Beispiel in dem Einzugskanal **12** angeordnet und umfasst einen Schichthöhensensor. Dieser ist dazu geeignet, eine Schichthöhe einer in dem Einzugskanal **12** geförderten Erntegutschicht zu erfassen, wobei über eine zeitliche Erfassung dieses Werts der Erntegutstrom bestimmbar ist.

Für die Ansteuerung des Fahrantriebs **2** mittels der Steuerung **7** gilt grundsätzlich der Zusammenhang, dass der Erntegutstrom möglichst innerhalb eines vorgegebenen Bereichs liegen sollte, an dem sich - gegebenenfalls in Abhängigkeit weiterer Ernteparameter und/oder Umweltparameter - die Erntemaschine **1** in einem optimalen Betriebspunkt befindet. Sofern der aktuelle Erntegutdurchsatz unterhalb des vorgegebenen Bereichs liegt, steuert die Steuerung **7** den Fahrantrieb **2** derart an, dass die Fahrgeschwindigkeit der Erntemaschine **1** erhöht wird. Hiermit ist die Absicht verbunden, innerhalb eines jeweiligen Zeitraums eine größere Menge von Erntegut **5** aufzunehmen, sodass der Erntegutstrom ansteigt und sich schließlich innerhalb des vorgegebenen Bereichs befindet. Umgekehrt kann bei einem aktuellen Erntegutdurchsatz oberhalb des vorgegebenen Bereichs die Fahrgeschwindigkeit automatisch verringert werden.

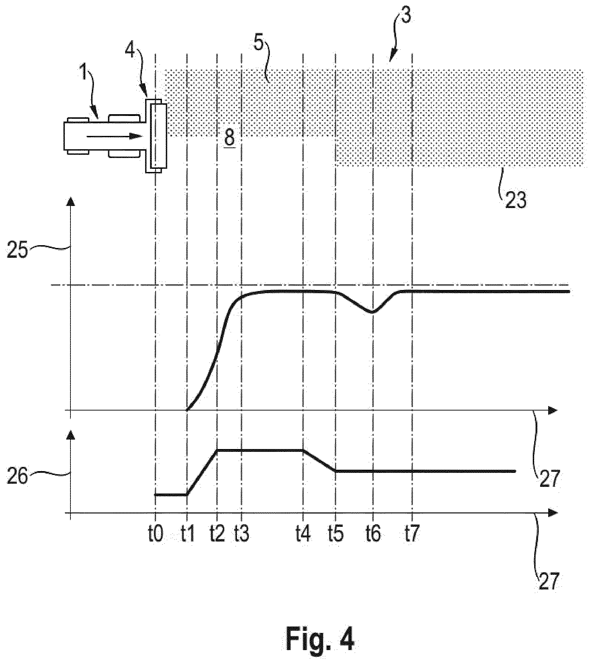

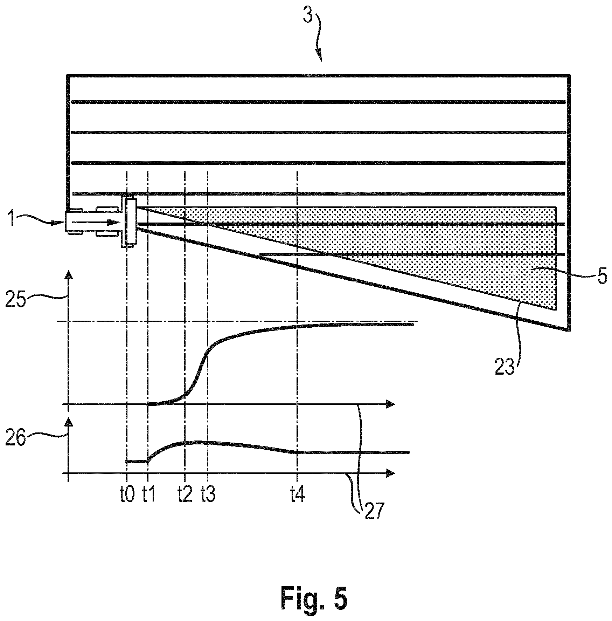

Diese Art des Betriebs des Mähdreschers **1** ist für den Normalfall einer vollen Schneidwerksbelegung des Schneidwerks **4** zweckmäßig. Für den Fall jedoch, dass das Schneidwerk **4** lediglich zum Teil belegt ist, das heißt Erntegut **5** im Vorfeld **8** der Erntemaschine **1** lediglich auf einem Teil einer Breite des Schneidwerks **4** auf dem Feld **3** vorhanden ist, kann es in bestimmten Situationen zu einer Überlastung der Arbeitsorgane der Erntemaschine **1** kommen. Das Risiko einer solchen Überlastung besteht insbesondere darin, dass ausgehend von einer teilweisen Belegung des Schneidwerks **4** sich selbige auf einer besonders kurzen Fahrstrecke der Erntemaschine **1** deutlich steigert. Dies kann beispielsweise bei einer schrägen Bestandskante **23** des jeweiligen Erntegutbestands an einem Rand des jeweiligen Feldes **3** der Fall sein. Ferner ist es denkbar, dass die Bestandskante **23** eine "gestufte" Form aufweist, in deren Folge die Belegung des Schneidwerks **4** an einer bestimmten Stelle schlagartig ansteigen kann. Entsprechende Beispiele ergeben sich anhand der **Figuren 4** **und** **5****,** die nachstehend gesondert erläutert werden.

Um eine Überlastung der Arbeitsorgane der Erntemaschine **1** zu vermeiden, umfasst die Erntemaschine **1** eine Erfassungseinrichtung **9,** mittels der Informationen betreffend einen im Vorfeld **8** vor der Erntemaschine **1** auf dem Feld **3** befindlichen Erntegutbestand erfassbar sind. Die von der Erfassungseinrichtung **9** erfassten Informationen werden an die Steuerung **7** geleitet und von dieser erhalten, sodass die Steuerung **7** diese zusätzlichen Informationen verwerten kann. Insbesondere liegen Informationen vor, welche Schneidwerksbelegung des Schneidwerks **4** bei planmäßiger Weiterfahrt der Erntemaschine **1** demnächst zu erwarten ist. Die Informationen betreffen entsprechend die erwartete Schneidwerksbelegung im Vorfeld **8** der Erntemaschine **1.** Dies ermöglicht es der Steuerung **7,** in Abhängigkeit von dieser erwarteten Schneidwerksbelegung den Fahrantrieb dahingehend anzusteuern, dass die Fahrgeschwindigkeit der Erntemaschine angepasst wird.

Zur Vermeidung einer Überlastung der Arbeitsorgane besteht diese Anpassung in aller Regel in einer Reduktion der Fahrgeschwindigkeit. Demzufolge kann die Fahrgeschwindigkeit bereits zu einem Zeitpunkt reduziert werden, zu dem sich die (ggf. schlagartig) ändernde Schneidwerksbelegung noch nicht in Form eines aktuellen Erntegutdurchsatzes in dem Einzugskanal **12** manifestiert hat. Müsste dies erst abgewartet werden und die Steuerung **7** erst dann reagieren können, wenn der aktuelle Erntegutdurchsatz in dem Einzugskanal **12** sprunghaft ansteigt, wäre eine Überlastung der nachgeschalteten Arbeitsorgane der Erntemaschine **1** kaum noch oder gar nicht zu vermeiden.

In dem gezeigten Beispiel umfasst die Erfassungseinrichtung sowohl eine Empfangseinrichtung **10** als auch eine Sensoreinheit **11.** Die Empfangseinrichtung **10** ist dazu vorgesehen und eingerichtet, Signale zur satellitengestützten Standortbestimmung zu empfangen, sodass mittels der Empfangseinrichtung **10** eine globale Position der Erntemaschine **1** bestimmt werden kann. Der Standort der Erntemaschine **1** zu einem jeweiligen Zeitpunkt kann sodann mittels verfügbaren Bestandskarten abgeglichen werden, sodass beispielsweise feststellbar ist, ob sich die Erntemaschine **1** entlang einer schrägen oder gestuften Bestandskante **23** bewegt. Mittels eines Abgleichs dieser Daten lässt sich vorhersagen, welche Schneidwerksbelegung der Erntemaschine **1** bei planmäßiger Weiterfahrt zu erwarten ist.

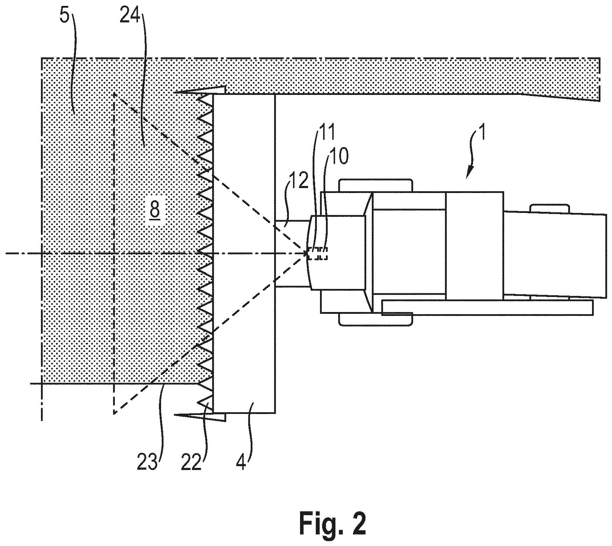

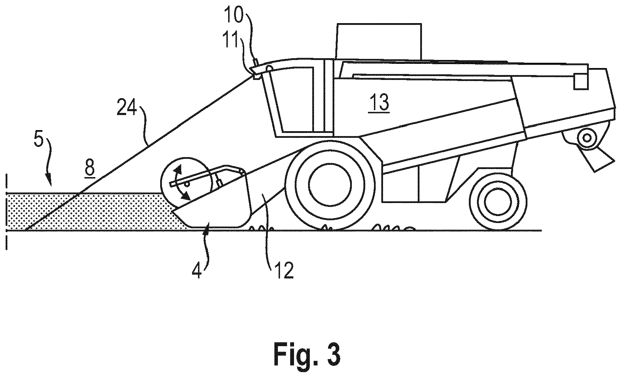

Die ergänzend vorhandene Sensoreinheit **11** umfasst in dem gezeigten Beispiel ein LIDAR-System, mittels dessen ein Beobachtungsbereich **24** im Vorfeld **8** der Erntemaschine **1** beobachtet werden kann. Dies ist anhand der **Figuren 2** **und** **3** veranschaulicht, wobei der Beobachtungsbereich **24** sich beispielsweise linienförmig über eine Breite des Schneidwerks **4** in einem gewissen Abstand vor der Erntemaschine **1** im Vorfeld **8** erstrecken kann. Mittels der Sensoreinheit **11** ist auf diese Weise erkennbar, wie sich der Erntegutbestand auf dem Feld **3** im Vorfeld **8** der Erntemaschine **1** entwickelt bzw. verändert, sodass die erwartete Schneidwerksbelegung des Schneidwerks **4** ermittelt werden kann.

Anhand der Beispiele gemäß den **Figuren 4** **und** **5** ist veranschaulicht, in welcher Weise sich die beschriebene Vorgehensweise auf die Fahrgeschwindigkeit der Erntemaschine **1** zum einen und den Erntegutdurchsatz der Erntemaschine **1** zum anderen auswirken kann.

In **Figur 4** ist schematisch ein Feld **3** mit einem darauf befindlichen Erntegutbestand in einer Draufsicht veranschaulicht. Die Erntemaschine **1** fährt an einem linken Ende des Feldes **3** zu einem Zeitpunkt t0 in den Erntegutbestand ein. Die Fahrgeschwindigkeit der Erntemaschine **1,** die in einem unteren Diagramm in **Figur 4** anhand einer Geschwindigkeitsachse **26** aufgetragen über eine Zeitachse **27** veranschaulicht ist, befindet sich beim Eintritt in den Erntegutbestand zunächst auf einem niedrigen ersten Niveau. Zum Zeitpunkt t1 erreicht das erste abgeschnittene Erntegut **5** den Einzugskanal **12,** sodass mittels der Sensoreinrichtung **6** ein Anstieg der Schichthöhe der in dem Einzugskanal **12** geförderten Erntegutschicht ermittelt wird. Dies ergibt sich anhand des in **Figur 4** oberen Diagramms, das die gemessene Schichthöhe auf einer Schichthöhenachse **25** gegenüber der Zeitachse **27** aufträgt. Die Schichthöhe steigt mit planmäßiger Weiterfahrt der Erntemaschine **1** zunächst weiter an.

Da das Schneidwerk **4** aktuell lediglich teilweise (hier ca. zur Hälfte) belegt ist, ist die Schichthöhe als solche und deren Anstieg über die Zeit insgesamt als gering zu bewerten, sodass die Steuerung zur Steigerung der Produktivität automatisch den Fahrantrieb ansteuert, die Fahrgeschwindigkeit zu erhöhen. Entsprechend wird die Fahrgeschwindigkeit zwischen den Zeitpunkten t1 und t2 ausgehend von dem ersten Niveau auf ein zweites höheres Niveau angehoben. Auf diese Weise wird die gemessene Schichthöhe in dem Einzugskanal **12** zügig in Richtung eines vorgegebenen Maximalwerts **28** entwickelt, mit dem ein sicherer Betrieb der Arbeitsorgane der Erntemaschine **1** noch möglich ist. Eine Annäherung an diesen Maximalwert **28** ist für eine Ausschöpfung der Produktivität vorteilhaft.

Zum Zeitpunkt t2 ist erkennbar, dass die Fahrgeschwindigkeit einen Wert erreicht hat, mittels dessen die Schichthöhe absehbar auf einen gewünschten Wert ansteigen wird. Diese Fahrgeschwindigkeit stellt damit bis auf Weiteres den Soll-Wert für die Fahrgeschwindigkeit dar. Der gewünschte Wert der Schichthöhe ist in etwa zum Zeitpunkt t3 erreicht. Die Erntemaschine **1** wird demzufolge mit der Fahrgeschwindigkeit auf dem zweiten Niveau bis auf Weiteres fortgesetzt. Zum Zeitpunkt t4 wird schließlich mittels der Erfassungseinrichtung **9** im Vorfeld **8** der Erntemaschine **1** eine Veränderung des Erntegutbestands registriert. Diese lässt erwarten, dass die Schneidwerksbelegung des Schneidwerks **4** bei planmäßiger Weiterfahrt der Erntemaschine **1** demnächst ansteigen wird. In dem gezeigten Beispiel ist die Bestandskante **23** des Erntegutbestands gestuft, sodass eine sprunghaft ansteigende Schneidwerksbelegung erwartet wird. In dem gezeigten Beispiel wird sich die Schneidwerksbelegung in etwa ausgehend von einer halben Belegung hin zu einer vollen Belegung entwickeln. Anhand der Erfassungseinrichtung **9** ist zudem erkennbar, wie weit im Vorfeld **8** vor der Erntemaschine **1** die Veränderung der Schneidwerksbelegung zu erwarten ist. In Kenntnis der Fahrgeschwindigkeit der Erntemaschine **1** ist somit der Zeitpunkt ermittelbar, zu dem sich die Schneidwerksbelegung verändern wird. Dieser Zeitpunkt ist in den Diagrammen in **Figur 4** auf der Zeitachse **27** mit t5 bezeichnet.

In Kenntnis der zu erwartenden Schneidwerksbelegung zum Zeitpunkt t5 steuert die Steuerung **7** den Fahrantrieb **2** der Erntemaschine dahingehend an, dass die Fahrgeschwindigkeit der Erntemaschine **1** angepasst, nämlich reduziert wird. Diese Reduktion der Fahrgeschwindigkeit findet bereits statt, bevor der sprunghafte Anstieg der Schneidwerksbelegung eintritt. Entsprechend wird die Fahrgeschwindigkeit in einem Zeitraum zwischen den Zeitpunkten t4 und t5 reduziert. Dies hat für die in dem Einzugskanal **12** gemessene Schichthöhe zunächst keine Auswirkung, da sich dort eine Veränderung der Fahrgeschwindigkeit lediglich verzögert auswirkt. Damit sich die Schneidwerksbelegung nämlich auswirken kann, muss das jeweils abgeschnittene Erntegut **5** zunächst in dem Schneidwerk **4** mittig auf Höhe des Einzugskanals **12** zusammengeführt und an den Einzugskanal **12** übergeben werden.

Die Reduktion der Fahrgeschwindigkeit zum Zeitpunkt t4 macht sich sodann in einer Abnahme der Schichthöhe in dem Einzugskanal **12** ab dem Zeitpunkt t5 bemerkbar. Da jedoch die Schneidwerksbelegung ab dem Zeitpunkt t5 in etwa verdoppelt ist, steigt die Schichthöhe in dem Einzugskanal **12** trotz gleichbleibender Geschwindigkeit ab dem Zeitpunkt t6 wieder an. Dabei ist die Fahrgeschwindigkeit von der Steuerung **7** ab dem Zeitpunkt t5 derart vorgegeben, dass unter Berücksichtigung des Anstiegs der Schneidwerksbelegung die Schichthöhe in dem Einzugskanal **12** sich wieder nahe des Maximalwerts **28** befindet. Auf diese Weise konnte mittels der Steuerung **7** in Zusammenwirkung mit der Sensoreinrichtung **6** und der Erfassungseinrichtung **9** eine Überlastung der Arbeitsorgane der Erntemaschine **1** vermieden werden, während die Auslastung der Erntemaschine **1** auf einem möglichst hohen Niveau gehalten wurde.

In einem weiteren Beispiel, das in **Figur 5** veranschaulicht ist, ist die Bestandskante **23** bezogen auf eine Fahrtrichtung der Erntemaschine **1** schräg orientiert. Das heißt, dass bei einer Einfahrt der Erntemaschine **1** in den Erntegutbestand auf dem Feld **3** die Schneidwerksbelegung sich sukzessive ausgehend von null auf eine volle Schneidwerksbelegung verändert. Bei einer Steuerung der Fahrgeschwindigkeit der Erntemaschine **1** allein anhand einer Erfassung der Schichthöhe der in dem Einzugskanal **12** geförderten Erntegutschicht würde die Fahrgeschwindigkeit aufgrund der zunächst geringen Schneidwerksbelegung (und der daraus resultierenden geringen Schichthöhe im Einzugskanal **12**) fortwährend gesteigert werden. Aufgrund der gleichzeitig und zunehmend zügig ansteigenden Schneidwerksbelegung sowie der vorstehend beschriebenen Verzögerung zwischen der Aufnahme des Ernteguts **5** und der Registrierung eines Anstiegs des Erntegutdurchsatzes im Einzugskanal **12,** könnte ein Signal zur Beibehaltung oder Reduktion der Fahrgeschwindigkeit erst so spät von der Steuerung **7** an den Fahrantrieb **2** abgegeben werden, dass der Erntegutdurchsatz bereits einen von den nachgeschalteten Arbeitsorganen aushaltbaren Maximalwert überschritten hätte.

Mittels der Erfassungseinrichtung **9** kann jedoch in der beschriebenen Weise die Schneidwerksbelegung im Vorfeld **8** der Erntemaschine **1** erfasst werden, sodass die Steuerung **7** den Fahrantrieb **2** ansteuern kann, die Fahrgeschwindigkeit entsprechend anzupassen. Im Ergebnis wird die Fahrgeschwindigkeit, die in **Figur 5** in dem dortigen unteren Diagramm auf einer Geschwindigkeitsachse **26** gegenüber einer Zeitachse **27** aufgetragen ist, ausgehend von einem ersten niedrigen Niveau zu einem Zeitpunkt t1 bis zu einem Zeitpunkt t2 zunächst gesteigert, wodurch im Interesse einer hohen Produktivität der Erntemaschine **1** die gemessene Schichthöhe in dem Einzugskanal **12** zunehmend zügig ansteigt. Dies ist in dem oberen Diagramm in **Figur 5** veranschaulicht, dass die Schichthöhe auf einer Schichthöhenachse **25** gegenüber der Zeitachse **27** aufträgt. In Erwartung der sukzessiv ansteigenden Schneidwerksbelegung im Vorfeld **8** der Erntemaschine **1** wird ab dem Zeitpunkt t2 die Fahrgeschwindigkeit dahingehend angepasst, dass sie nicht weiter gesteigert wird. Stattdessen wird sie bis zum Zeitpunkt t3 zumindest im Wesentlichen konstant gehalten, während die Schichthöhe aufgrund der beschriebenen Verzögerung im gleichen Zeitraum weiter deutlich ansteigt. Die Auswirkung der ausbleibenden weiteren Beschleunigung der Erntemaschine **1** auf die Schichthöhe zeigt sich ab dem Zeitpunkt t3, ab dem die Schichthöhe zwar weiter ansteigt, dies jedoch nicht mehr durch eine Beschleunigung der Erntemaschine **1,** sondern nur noch durch die steigende Schneidwerksbelegung des Schneidwerks **4** bedingt ist.

Da infolge der Erfassung der erwarteten Schneidwerksbelegung mittels der Erfassungseinrichtung **9** bekannt ist, dass diese schließlich den maximalen Wert erreichen wird (volle Belegung des Schneidwerks **4**) wird die Fahrgeschwindigkeit mittels der Steuerung **7** ab dem Zeitpunkt t3 sukzessive reduziert, um der steigenden Schneidwerksbelegung entgegenzuwirken und hierdurch den Erntegutdurchsatz nicht auf einem zu hohen Wert ansteigen zu lassen. Ab dem Zeitpunkt t4, zu dem die Schneidwerksbelegung ihr Maximum erreicht hat, wird die Fahrgeschwindigkeit konstant gehalten. Die Schichthöhe in dem Einzugskanal **12** steigt nach dem Zeitpunkt t4 noch geringfügig an, was zeitverzögert durch den vergangenen restlichen Anstieg der Schneidwerksbelegung bedingt ist. Schließlich erreicht die Schichthöhe in dem Einzugskanal **12** ihren höchsten Wert nahe des Maximalwerts **28.** Die Erntemaschine **1** läuft mithin sodann mit optimaler Produktivität. Eine Überlastung der Arbeitsorgane konnte mittels der vorausschauenden Reduktion der Fahrgeschwindigkeit in Kenntnis der zu erwartenden Schneidwerksbelegung vermieden werden.

### Bezugszeichenliste

- 1: Erntemaschine
- 2: Fahrantrieb
- 3: Feld
- 4: Schneidwerk
- 5: Erntegut
- 6: Sensoreinrichtung
- 7: Steuerung
- 8: Vorfeld
- 9: Erfassungseinrichtung
- 10: Empfangseinrichtung
- 11: Sensoreinheit
- 12: Einzugskanal
- 13: Korntank
- 14: Trennrotor
- 15: Rücklaufboden
- 16: Häcksler
- 17: Radialgebläse
- 18: Siebeinrichtung
- 19: Sieb
- 20: Vorbereitungsboden
- 21: Drescheinrichtung
- 22: Messerbalken
- 23: Bestandskante
- 24: Beobachtungsbereich
- 25: Durchsatzachse
- 26: Geschwindigkeitsachse
- 27: Zeitachse

## Patentansprüche

1. Erntemaschine (1), umfassend
- einen Fahrantrieb (2) zur Bewegung der Erntemaschine (1) mit einer Fahrgeschwindigkeit über ein Feld (3),
- ein Schneidwerk (4) zum Abschneiden von auf dem Feld befindlichen Erntegut (5),
- eine Sensoreinrichtung (6) zur Erfassung von Informationen betreffend einen aktuell von der Erntemaschine (1) verarbeiteten Erntegutdurchsatz,
- eine Steuerung (7), die dazu vorgesehen und eingerichtet ist, den Fahrantrieb (2) der Erntemaschine (1) abhängig von den erfassten Informationen zur Einstellung der Fahrgeschwindigkeit auf einen gewünschten Soll-Wert anzusteuern,
**dadurch gekennzeichnet, dass**
die Steuerung (7) dazu vorgesehen und eingerichtet ist, zusätzlich Informationen zu einer erwarteten Schneidwerksbelegung im Vorfeld (8) der Erntemaschine (1) zu erhalten und den Fahrantrieb (2) abhängig von der erwarteten Schneidwerksbelegung zur Anpassung der Fahrgeschwindigkeit anzusteuern.

2. Erntemaschine (1) nach Anspruch 1, **gekennzeichnet durch** eine Erfassungseinrichtung (9) zur Erfassung von Informationen betreffend einen im Vorfeld (8) vor der Erntemaschine (1) auf dem Feld (3) befindlichen Erntegutbestand.

3. Erntemaschine (1) nach Anspruch 2, **dadurch gekennzeichnet, dass** die Erfassungseinrichtung (9) eine Empfangseinrichtung (10) zur Erfassung von Signalen zur satellitengestützen Standortbestimmung umfasst.

4. Erntemaschine (1) nach Anspruch 2 oder 3, **dadurch gekennzeichnet, dass** die Erfassungseinrichtung (9) eine Sensoreinheit (11) umfasst, die dazu vorgesehen und eingerichtet ist, Informationen zur voraussichtlichen Schneidwerksbelegung des Schneidwerks (4) zu erfassen, die bei planmäßiger Weiterfahrt der Erntemaschine (1) zu erwarten ist.

5. Erntemaschine (1) nach Anspruch 4, **dadurch gekennzeichnet, dass** die Sensoreinheit (11) mindestens ein LIDAR-System umfasst, das zur Erfassung des Vorfelds (8) vor der Erntemaschine (1) eingerichtet ist.

6. Erntemaschine (1) nach Anspruch 4 oder 5, **dadurch gekennzeichnet, dass** die Sensoreinheit (11) mindestens eine Kamera umfasst, die zur Erfassung des Vorfelds (8) vor der Erntemaschine (1) eingerichtet ist.

7. Erntemaschine (1) nach einem der Ansprüche 2 bis 6, **dadurch gekennzeichnet, dass** mittels der Erfassungseinrichtung (9) erfasste Informationen an die Steuerung (7) oder eine externe Verarbeitungseinheit leitbar und mittels dieser verarbeitbar sind, um die Informationen zu der erwarteten Schneidwerksbelegung zu erzeugen.

8. Erntemaschine (1) nach einem der vorhergehenden Ansprüche, **dadurch gekennzeichnet, dass** die Sensoreinrichtung (6) derart mit einem Einzugskanal (12) der Erntemaschine (1) zusammenwirkt, dass mittels der Sensoreinrichtung (6) der Erntegutdurchsatz im Einzugskanal (12) erfassbar ist.

9. Erntemaschine (1) nach Anspruch 8, **dadurch gekennzeichnet, dass** die Sensoreinrichtung (6) einen Schichthöhensensor umfasst, mittels dessen eine Schichthöhe einer Erntegutschicht des durch den Einzugskanal (12) geförderten Ernteguts (5) erfassbar ist.
